# EUROPEAN PATENT SPECIFICATION

(11) **EP 2 402 466 B1**
(45) Date of publication and mention of the grant of the patent: **02.01.2019**
(21) Application number: 10746173.3
(22) Date of filing: 22.02.2010
(51) Int. Cl.: C21D 9/46, C21D 1/18, C21D 1/34, C21D 1/42, C21D 9/08, C22C 38/00

(54) **MANUFACTURING METHOD AND HEAT-TREATMENT DEVICE FOR HIGH-STRENGTH, HIGHLY-TOUGH THIN STEEL**
HERSTELLUNGSVERFAHREN UND WÄRMEBEHANDLUNGSVORRICHTUNG FÜR HOCHFESTEN DÜNNSTAHL MIT HOHER WIDERSTANDSFÄHIGKEIT
PROCÉDÉ DE FABRICATION ET DISPOSITIF DE TRAITEMENT THERMIQUE POUR ACIER MINCE À HAUTE RÉSISTANCE

(30) Priority: 24.02.2009 JP 2009041571
(43) Date of publication of application: 04.01.2012
(73) Proprietor: Delta Tooling Co., Ltd., Hiroshima-shi Hiroshima 736-0084 (JP)
(72) Inventor: FUJITA, Etsunori, Hiroshima-shi Hiroshima 736-0084 (JP); OGURA, Yumi, Hiroshima-shi Hiroshima 736-0084 (JP); KAWASAKI, Seiji, Hiroshima-shi Hiroshima 736-0084 (JP); KOJIMA, Shigeyuki, Hiroshima-shi Hiroshima 736-0084 (JP); MAKITA, Soichi, Hiroshima-shi Hiroshima 736-0084 (JP); MAEDA, Shigeru, Aki-gun Hiroshima 735-8501 (JP); YAMANE, Hideyuki, Aki-gun Hiroshima 735-8501 (JP); YOSHIDA, Seiya, Aki-gun Hiroshima 735-8501 (JP)
(74) Representative: Hoffmann Eitle
(86) International application number: PCT/JP2010/052651
(87) International publication number: WO 2010/098292

(56) References cited:
- EP-A1- 2 404 780
- WO-A1-98/48061
- WO-A2-2004/018715
- JP-A- 5 148 546
- JP-A- 2002 256 335
- JP-A- 2002 371 315
- JP-A- 2005 194 614
- JP-A- 2007 231 323
- JP-A- 2008 013 835
- US-A- 3 278 345
- US-A- 4 067 756
- US-A- 4 613 385

## Description

### Technical Field

The present invention relates to a manufacturing method of a high-strength and high-toughness thin steel which performs heat treatment to a thin low-carbon steel as a reception material to manufacture a high-strength and high-toughness thin steel, and a heat treatment apparatus.

### Background Art

For example, a seat frame for transportation equipment such as an automobile or an airplane is strongly required to be reduced in weight in view of fuel consumption improvement, carbon dioxide emission control or the like, and thus, high strength of a steel material used for forming a seat frame is in demand. On the other hand, the seat frame is also required to have not only high strength but also high toughness (also including ductility) in view of impact absorbing properties owing to deformation or the like. As techniques satisfying these demands, for example, high-strength steel plates disclosed in Patent Literatures 1 to 3 are known.

Each of the high-strength steel plates disclosed in these Literatures assumes control on an addition amount of an alloy element other than carbon, and it is made to contain, for example, Mn, Mo, Cr, or the like in a predetermined amount or more to secure a predetermined hardness or ductility. Then, for use as a steel material for an automobile or the like, the high-strength steel plate is finally cold-rolled down to a thickness of 1.2 mm, but heat treatment performed at a step before the cold rolling is to heat-roll a steel slab to a thickness of 3.2 mm. That is, since the techniques disclosed in these Literature are techniques for obtaining a steel plate with a thickness of several mm or thicker, it is necessary to achieve evenness of a microstructure including a plate-thickness direction in the steel plate in the heat treatment, and thus, control on an addition amount of an alloy element is an important factor.

On the other hand, in Patent Literatures 4 to 5, techniques of achieving high strength of an ordinary low-carbon steel have been disclosed. Patent Literature 4 discloses a technique proposed in order to solve such a problem that, since tempering property of an ordinary low-carbon steel was poor in the previous technique, when a martensitic state was utilized as an originating structure, an uneven duplex grain structure was produced during an annealing time so that a predetermined high-strength and high-ductility steel material could not be obtained. Therefore, in Patent Literature 4, after an ordinary low-carbon steel is tempered to achieve martensitic phase of 90% or more, an ultra-fine crystal grain ferrite structure with grain diameters of 1.0 µm or less is obtained by performing cold-rolling with a total reduction ranging from 20% to less than 80% and performing annealing. Patent Literature 5 is the technique which has been proposed by the present applicant, where high strength is achieved by performing working process for elevating internal stress, such as press forming, and achieving refinement and duplex grain sizing of a metal structure of a low-carbon steel by heat treatment.

### Citation List

### Patent Literature

Patent Literature 1: Japanese Patent No. 4005517
Patent Literature 2: JP-A-2005-213640
Patent Literature 3: JP-A-2008-297609
Patent Literature 4: Japanese Patent No. 4189133
Patent Literature 5: JP-A-2008-13835

US 4,613,385 discloses a method for making high strength, high ductility steel wire and rods comprising the steps of heating a steel composition to a temperature T₁ to completely austenitize the steel, quenching the resulting austenitized steel composition to transform the austenite to martensite, heating the resulting martensitic steel composition to a temperature T₂ to transform the martensitic composition to a mixture of ferrite and austenite, quenching the resulting ferrite-austenite steel composition to transform the austenite to martensite, and cold drawing the resulting steel composition, wherein T₁ is in the range of 1050 °C to 1170 °C and T₂ is in the range of 800 °C to 1000 °C.

US 4,067,756 discloses a method for producing a high strength, high ductility steel characterized by a duplex ferrite-martensite microstructure in a fibrous morphology which comprises heating a steel composition to a temperature T₁ to completely austenitize the steel, quenching the resulting austenitic composition to completely transform the austenite to martensite, heating the resulting composition at a temperature T₂ to transform the martensite to a mixture of ferrite and austenite, and quenching the resulting ferrite-austenitic composition to transform the austenite to martensite, wherein T₁ is in the range of 1050 °C to 1170 °C and T₂ is in the range of 800 °C to 1000 °C.

### Summary of Invention

### Technical Problem

A demand for reduction of cost or recycling efficiency of resources of a seat frame for an automobile or the like increasingly becomes high from now due to energy saving, accommodation to environmental problems, or the like. Therefore, rather than high strength or high toughness achieved by alloying like the techniques described in Patent Literatures 1 to 3, achievement using an ordinary low-carbon steel which elevates the recycling efficiency is desired. Further, these techniques are techniques mainly implemented by iron and steel material manufacturers for producing a predetermined high-strength and high-toughness steel from a steel slab and they are not techniques which can be utilized by processing manufacturer which manufactures a seat frame or the like using a commercially-available steel. If the processing manufacturer purchases an ordinary steel (common steel) which is inexpensive and easy to work from an iron and steel material manufacturer rather than purchasing a material sold as a high-strength and high-toughness steel by the iron and steel material manufacturer, and can achieve high-strength and high-toughness at a required portion of the ordinary steel if necessary, cost reduction of a seat frame can be achieved.

The technique disclosed in Patent Literature 4 is a technique for obtaining desired strength and ductility using an ordinary low-carbon steel as a reception material of heat treatment, but it requires a process where after the whole steel material is martensitized, it is cold-rolled to achieve refinement homogeneously. Therefore, an installation provided with a rolling function is required, which includes a problem regarding installation cost and manufacturing cost. As apparent from such a fact that an ordinary low-carbon steel material with a thickness of 2 mm is exemplified in an Example in patent Literature 4, in order to achieve high strength and high ductility of a steel with a certain thickness, it is necessary to achieve homogeneous refinement in a plate-thickness direction so that a cold-rolling step under predetermined conditions is essential after the martensitization.

In the case of the technique disclosed in Patent Literature 5, refinement and high strength are achieved by heat-treating a thin cold-rolled steel plate and a thin hot-rolled steel plate having a thickness of 1.2 mm and a thickness of 1.0 mm in Examples, but there is room for further improvement of toughness.

The present invention has been made in view of the above circumstances, and a problem to be solved thereof is to provide a technique excellent in cost reduction and recyclability as well as suitable for elevating strength and toughness of a thin low-carbon steel which is an ordinary steel on the side of a processing manufacturer.

### Solution to Problem

As a result of the present inventors' keen study for solving the above problem, since a thin low-carbon steel which is an ordinary steel (common steel) with a thickness of 1.2 mm or less is thin, it has a high heat capacity and it tends to be rapidly heated and rapidly cooled easily. The present inventors have focused on such a fact that, owing to a duplex grain size structure where crystal grains different in grain diameter and formed by rapid heating and rapid cooling have been mixed, preferably, owing to a structure where hard phase structure higher in hardness than such a duplex grain size structure has been contained in addition to the duplex grain size structure, a steel where strength and toughness have been balanced in high level can be obtained even if refined crystal grains with a size of 1 µm or less are not contained at a high percentage as in a thick steel or even unless homogenization is achieved in a plate-thickness direction. The present inventors have also focused on such a fact that it is effective to perform a heat treatment process involving rapid heating and rapid cooling multiple times without requiring a cold-rolling step after heat treatment or the like in order to obtain a duplex grain size structure where grain diameters of crystal grains are different in this manner in a thin low-carbon steel.

The present invention provides a method for manufacturing a high-strength and high-toughness thin steel by heat-treating a steel raw material, as defined in claim 1.

Further, the present invention provides a heat treatment apparatus which uses a thin low-carbon steel, as defined in claim 11.

### Advantageous Effect of the Invention

According to the manufacturing method of a high-strength and high-toughness thin steel and the heat treatment apparatus, by performing rapid heating and rapid cooling to a thin low-carbon steel having a thickness
of 1.2 mm or less, a duplex grain size structure where a microstructure is inhomogeneous and crystal grains different in grain diameter have been mixed is obtained, preferably, a structure where a hard phase structure is contained in addition to the duplex grain size structure is obtained, so that a thin low-carbon steel with high strength and high toughness is obtained. Further, by performing a heat treatment process involving rapid heating and rapid cooling multiple times, a duplex grain size structure of crystal grains having smaller grain diameters or a hard phase structure contained therein is obtained, so that a thin low-carbon steel with higher strength and higher toughness is obtained. In addition, by using a heat treatment apparatus provided with two heating sections and two cooling sections arranged in a predetermined order, the plurality of times of the rapid heating and the rapid cooling can be efficiently performed. Furthermore, by using one heating section having a predetermined length and arranging the first cooling section on the side opposite to the heating section via a work, an apparatus can be made simpler, which results in contribution to manufacturing cost reduction of a high-strength and high-toughness thin steel.

### Brief Description of Drawings

FIG. 1A is a diagram showing a schematic configuration of a high-frequency induction heating apparatus, FIG. 1B is a diagram showing a schematic configuration of another high-frequency induction heating apparatus, and FIG. 1C is a diagram showing a schematic configuration of a high-frequency induction heating apparatus where one heating section which performs rapid heating in a first process and in a second process is provided and rapid cooling treatment is performed from both sides of a work;
FIG. 2 is a graph showing temperature conditions of treatment conditions (A) and (B) in Test Example 1;
FIGS 3A to 3C are electron microscope photographs of microstructures of Samples 1 to 3 which were treated under the treatment conditions (A) and (B) of Test Example 1;
FIG. 4 is a graph showing a temperature condition of a treatment condition (C) in Test Example 2;
FIG. 5 is an electron microscope photograph of a microstructure of Sample 1 which was treated under the treatment condition (C) of Test Example 2;
FIG. 6A is electron microscope photographs of microstructures of raw material states of Sample 1 and Sample 2, and FIGS. 6B and 6C are electron microscope photographs of respective microstructures of Sample 1 (Comparative Sample 1) and Sample 2(Comparative Sample 2) which were treated in Comparative Example 1;
FIG. 7 is a graph showing a relationship between hardness (Hv) and fractal dimension of Sample 1 to Sample 3 which were treated by Test Example 1, Test Example 2, and Comparative Example 1;
FIG. 8 is a graph showing a relationship between breaking elongation and fractal dimension of Sample 1 to Sample 2 which were treated by Test Example 1, Test Example 2, and Comparative Example 1;
FIGS. 9A and 9B are diagrams for explaining a measuring method of a bending test of Test Example 3;
FIG. 10 is a graph showing a measurement result of the bending test of Test Example 3;
FIG. 11 is a graph showing a measurement result of a tensile test of Test Example 4; and
FIG. 12 is a graph showing a measurement result of a tensile test of a pipe-shaped steel of Test Example 5.

### Description of Embodiments

In a method for manufacturing a high-strength and high-toughness thin steel according to the present invention, a steel raw material which is a reception material of heat treatment is a commercially-available ordinary steel (common steel), which is a thin and low-carbon one (hereinafter, called "thin low-carbon steel"). As the thin low-carbon steel, a rolled steel plate which is inexpensive and excellent in workability and which is used in a seat frame of an automobile or the like is suitable, the rolled steel plate including both a cold-rolled steel plate and a hot-rolled steel plate. The thickness of the rolled steel plate is 1.2 mm or less. When the thickness of the rolled steel is thicker than 1.2 mm, a large heat source and a large-scaled cooling installation are required for performing rapid heating and rapid cooling in order to achieve high strength and high toughness, and because homogeneity of crystal grains is required in a plate-thickness direction, it is difficult to perform control, so that such a thick rolled steel plate is unfit for a steel raw material which is a target to be treated of the present invention. A steel raw material to be treated of the present invention, which does not involve a rolling process and whose high strength and high toughness should be achieved by only a heat treatment process of rapid heating and rapid cooling is preferably a thin low-carbon steel with a thickness of 1.0 mm or less, more preferably a thin low-carbon steel with a thickness of 0.8 mm or less, and further preferably a thin low-carbon steel with a thickness of 0.5 mm or less.

As the above thin low-carbon steel, a low-carbon steel whose carbon content is in a range of 0.01 to 0.3% and whose rest is composed of iron and inevitable impurities can be used, but an extremely-low-carbon steel whose carbon content is in a range of 0.01 to 0.12% and whose rest is composed of iron and inevitable impurities is preferably used. By using a material whose carbon content is lower and is further inexpensive, reduction of a manufacturing cost of a seat frame or the like can be achieved. Further, in the present invention, by performing limitation to a thin material, even if carbon content is low, strength can be elevated and balance with toughness can be achieved, so that it is unnecessary to perform addition of an alloy element other than carbon and recycling efficiency is excellent. On the other hand, since there is no limitation about a component except for the above carbon content, for example, a recycle steel material mixed with a material which was used as an ordinary steel, where various components other than carbon were mixed, is also usable. Incidentally, the thin low-carbon steel which is a target to be treated includes both a plate-shaped one and a pipe-shaped one.

It is preferred that a process of heat-treating the above thin low-carbon steel is performed according to the following two steps. That is, the process of performing heating treatment includes a first process of rapidly cooling a thin low-carbon steel after rapid heating thereof to obtain a martensite structure and a second process of rapidly cooling the thin low-carbon steel which has been subjected to the first process after rapidly reheating the thin low-carbon steel up to a temperature lower than a temperature at the rapid heating time in the first process. Incidentally, it is possible to perform the treatments of the thin low-carbon steel in the first process and the second process multiple times in a repeating manner.

The first process includes a step of rapidly heating the thin low-carbon steel up to a temperature of 1000°C or higher, preferably, up to a temperature in a range of 1000°C to 1250°C, at a rate of 300°C/second or more and a step of, after the rapid heating, maintaining the thin low-carbon steel within ten seconds, preferably, within five seconds, until the temperature of the thin low-carbon steel drops to a predetermined temperature of 900°C or higher, preferably, drops to a temperature in a range of 1000°C to 1100°C, and thereafter rapidly cooling the thin low-carbon steel at a rate of 300°C/second or more. By rapidly heating the thin low-carbon steel up to the above temperature, a metal structure of the thin low-carbon steel is austenitized and a martensite structure is formed by the rapid cooling, but since the thickness of the thin low-carbon steel which is a target to be treated of the present invention is 1.2 mm or less, a homogeneous martensite structure which have escaped relatively coarsening can be formed by, so to speak, ultra-rapid heating and ultra-rapid cooling such as 300°C/second or more. Incidentally, the rapid heating rate and the rapid cooling rate are more preferably set to 500°C/second or more.

The second process includes a step of rapidly heating the thin low-carbon steel up to 700°C or higher, preferably, up to a temperature in a range of 750°C to 1050°C, at a rate of 300°C/second or more, after the cooling in the first process, and a step of, after the rapid heating, maintaining the thin low-carbon steel within ten seconds, preferably, within five seconds, until the temperature of the thin low-carbon steel drops to a predetermined temperature of 600°C or higher, preferably, to a temperature in a range of 700°C to 950°C and thereafter rapidly cooling the thin low-carbon steel at a rate of 300°C/second or more. When the thin low-carbon steel which has been subjected to the first process is heat-treated in the second process again, it is preferred that the heat treatment is performed after the temperature of the thin low-carbon steel drops to 200°C or lower by the rapid cooling in the first process . The heat treatment in the second process may be performed in another line at a lower temperature, for example, after the temperature drops to room temperature. Incidentally, the rapid heating rate and the rapid cooling rate in the second process are more preferably set to 500°C/second or more similarly to the first process.

By performing the above ultra-rapid heating and ultra-rapid cooling in the second process, the martensite structure is changed, and a duplex grain size structure which includes a duplex grain size structure of crystal grains different in grain diameter in a range from 1µm to 30µm (the term "grain diameter" in this text indicates "grain diameter such as a circular phase"), where crystal grains different in grain diameter having an average grain diameter smaller than an average grain diameter of a martensite obtained when heat treatment has been performed in order to form the martensite, namely, an average grain diameter of a martensite obtained when the heat treatment in the first process has been performed have aggregated, can be finally obtained.

The duplex grain size structure is preferably a structure having a configuration where crystal grains with grain diameters of 1µm to less than 5µm and crystal grains with grain diameters of 5µm to 30µm have been mixed, and it is further preferably a structure having a configuration where crystal grains with grain diameters of 1µm to less than 5µm and crystal grains with grain diameters of 5µm to 20µm have been mixed. Since the heat-treated steel has the duplex grain size structure different in grain diameter in this manner instead of a homogeneous grain diameter, a partial elongation occurs in the case of the thin low-carbon steel, so that a steel having higher toughness can be obtained. In order to obtain higher strength, it is preferred that hard phase structures higher in hardness than the duplex grain size structure are dispersed in the duplex grain size structure. For example, when the duplex grain size structure is a ferrite structure different in grain diameter, it is preferred that island-shaped martensites having a grain diameter of 30µm or less, preferably, 20µm or less are dispersed in the duplex grain size structure. Thereby, a thin low-carbon steel with high strength and high toughness where a reaction force due to deflection of a beam due to a bending moment at a transition point from an elastic region to a plastic region is at least 1.5 times that before heat treatment in a bending property, a yield point in a tensile property has a strength of at least 1.5 times that before heat treatment, and a breaking elongation is at least 1.5 times that in a state where heat treatment forming martensite has been performed in a thin low-carbon steel, namely, when the heat treatment in the first process has been performed can be obtained.

In the high-strength and high-toughness thin steel obtained by the present invention, a microstructure is the duplex grain size structure of crystal grains different in grain diameter, as described the above, preferably, a structure where hard phase structures such as martensite have been dispersed in the duplex grain size structure. In the present invention, the thin low-carbon steel provided with high strength and high toughness is obtained by such a structure control, but the present inventors have found that the microstructure can be regulated from the view point of fractal dimension of a grain diameter. Though described in detail later, the microstructure of the thin low-carbon steel which has been controlled by the heat treatment like the present invention has a fractal dimension of a grain diameter higher than that of a grain diameter in martensite obtained when heat treatment for forming martensite has been performed, namely, by only the heat treatment in the first process.

Incidentally, the term "fractal dimension" is a measure representing the degree of complexity, where in a figure having a self-similarity, when the figure is composed of m similar figures obtained by reducing the figure into a size of 1/n thereof, fractal dimension (similarity dimension) D is expressed by D = log (m)/log (n) = log (the number of similar figures to an original figure)/log (the number of equal divisions). Accordingly, the "fractal dimension of a grain diameter" in this text becomes higher according to advance to further refinement of crystal grains.

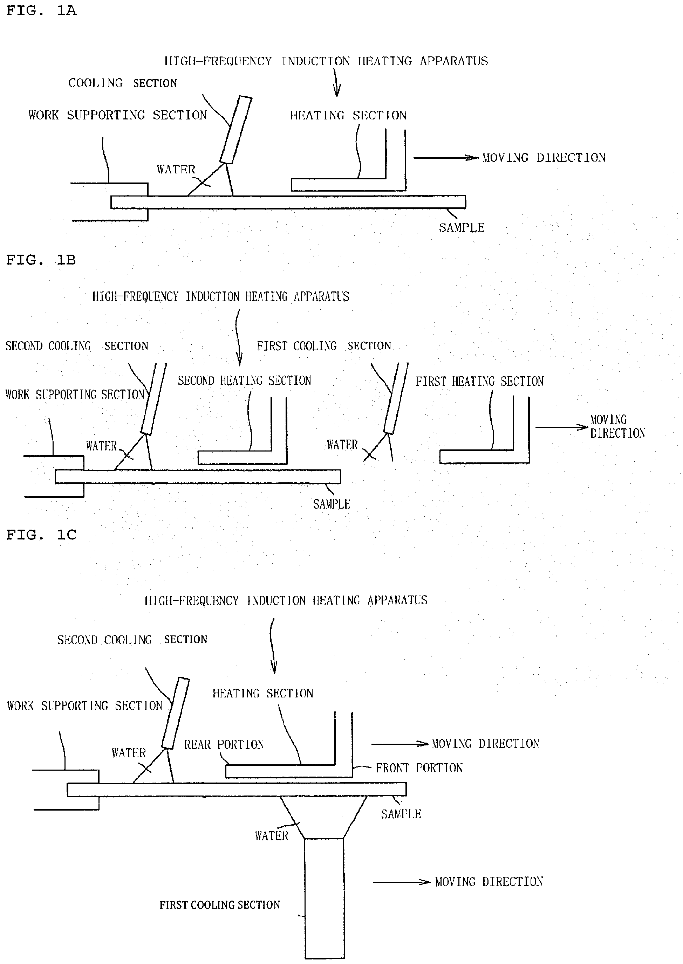

It is preferred that, as a heat treatment apparatus which performs each heat treatment in the first process and the second process, a high-frequency induction heating apparatus is used. Further, a heating section (a coil configuring an induction heating section in the case of an
induction heating apparatus) and a cooling section (a cooling water supplying section supplying cooling water) of the high-frequency induction heating apparatus move at a predetermined speed relative to the thin low-carbon steel which is a target to be heat-treated and the work supporting section. Thereby, the rapid heating and the rapid cooling treatment in the above-described extremely short time can be realized even by a small-scaled installation. A moving speed of the heating section (a coil configuring an induction heating section in the case of an induction heating apparatus) and the cooling section of the high-frequency induction heating apparatus is preferably set in a range within 30 mm/second, more preferably set in a range within 18 mm/second. Incidentally, a work (thin low-carbon steel) is supported by the work supporting section, and when the work is a plate-shaped one, the work supporting section may be configured with a flat plate-shaped table on which the plate-shaped work can be placed or a grasping section (see FIG. 1A to 1C) which grasps an end portion of the work. Further, when the work is pipe-shaped, it is preferred that treatment is performed while the work is being rotated, so that it is preferred that such a configuration is adopted that the work supporting section has a grasping section which can grasp the pipe-shape one and the grasping section is rotatable.

FIG. 1A shows a high-frequency induction heating apparatus provided with a heating section and a cooling water supplying section in this order. The heating section and the cooling water supplying section are provided by only one set thereof, where when the treatment in the first process is performed, the heating section is controlled to a predetermined temperature so that the heating section is made to function as a first heating section (coil) to perform treatment, and the cooling water supplying section is similarly made to function as a first cooling section (a cooling water supplying section) . After the treatment of the first process is performed, the treatment in the second process
is performed again by the high-frequency induction heating apparatus shown in FIG. 1A. In this case, the heating section is controlled to a temperature lower than that in the treatment performed in the first process to be made to function as a second heating section (coil), while the cooling section is made to function as a second cooling section, so that the treatment is performed. Fig. 1B shows a high-frequency induction heating apparatus in which a first heating section (coil) and a first cooling section (first cooling water supplying section) which perform the treatment in the first process and a second heating section (coil) and a second cooling section (second cooling water supplying section) which perform the treatment in the second section are provided in this order. According to the apparatus shown in FIG. 1B, the first process and the second process can be performed continuously, so that a treatment rate of a work is improved.

According to the present invention, as shown in FIG. 1C, such a configuration can be adopted that both functions of the first heating section in the first process and the second heating section in the second process are satisfied by using a heating section (coil) having a predetermined length or longer in a moving direction, for example, a lengthy one having a length of about 5 to 10 cm. That is, the heating section is disposed on the side of one face of a work (thin low-carbon steel), and a cooling section (first cooling water supplying section) is provided on the side opposite to the work so as to correspond to a vicinity of a front portion of the heating section in the moving direction. Thereby, the vicinity of the front portion of the heating section in the moving direction performs the rapid heating treatment in the first process and the first cooling water supplying section corresponding thereto performs the rapid cooling treatment in the first process. The heating section and the first cooling
water supplying section move as a set thereof. Then, a site on the work which has been subjected to the rapid heating and rapid cooling treatments in the first process is rapidly reheated by the vicinity of a rear portion of the heating section. Thereby, the rapid heating treatment in the second process is performed. Thereafter, a cooling section (second cooling water supplying section) disposed to be separated from the heating section by a predetermined distance rearward in the moving direction rapidly cools the site on the work which has been rapidly heated by the vicinity of the rear portion of the heating section to apply the rapid cooling treatment in the second process to the site. Accordingly, when the lengthy heating section (coil) shown in FIG. 1C is used, the rapid heating in the first process and the second process can be performed by one heating section (coil), so that a high-frequency induction heating apparatus which has a simple and inexpensive structure can be realized. As shown in FIG. 1C, the second cooling water supplying section is disposed on the same side as the heating section via the work. In order to perform efficient rapid cooling, the second cooling water supplying section is disposed on the same side as the heating section, as shown in FIG. 1C.

Incidentally, as the first heating section and the second heating section in the first process and the second process, a laser is provided, so that each rapid heating treatment may be performed by laser heating.

### (Test Example 1) (Reference)

Heat treatment was applied to following respective Samples.

### (1) Sample 1: a cold-rolled steel plate of an ordinary steel (SPCC)

- Chemical Components (%) : C = 0.04, Si = 0.02, Mn = 0.26, P = 0.011, and S = 0.006
- Thickness: 0.5 mm, Width: 100 mm, and Length: 200 mm (2) Sample 2: a cold-rolled steel plate of an ordinary steel (SPCC)
- Chemical Components (%): C = 0.037, Si = 0.004, Mn = 0.19, P = 0.013, S = 0.012, sol Al = 0.015, Cu = 0.02, Ni = 0.02, and B = 14 (PPM)
- Thickness: 0.5 mm, Width: 100 mm, and Length: 200 mm (3) Sample 3: a cold-rolled steel plate of an ordinary steel (JSC440)
- Chemical Components (%): C=0.12, Si=0.06, Mn=1.06, P = 0.022, and S = 0.005
- Thickness: 0.6 mm, Width: 100 mm, and Length: 200 mm

As the heat treatment apparatus, a high-frequency induction heating apparatus provided with one set of the heating section and the cooling section shown in FIG. 1A was used, where after the treatment in the first process was performed by the heating section and the cooling water supplying section, each Sample was left down to room temperature, and the treatment in the second process was then performed by the same high-frequency induction heating apparatus. As the treatment condition, the following two treatment conditions (A) and (B) were adopted.

### • Treatment Condition (A)

### • First process

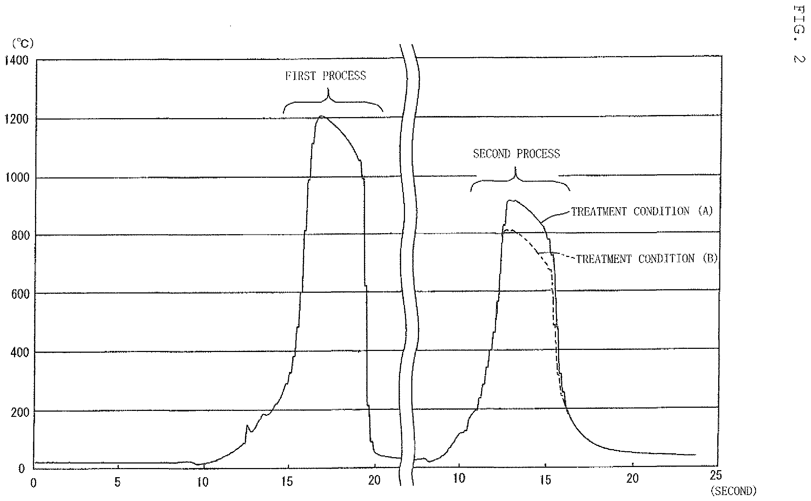

(1) Moving speed of the heating section and the cooling water supplying section: 800mm/min.
(2) The coil of the heating section was adjusted to 120A. A sample was pre-heated according to gradual temperature rising as the heating section came relatively close to the sample, but the sample was rapidly heated from 400°C to 1200°C in about one second. Thereafter, the sample was held for about 2.5 seconds until the temperature thereof dropped to 1050°C, and it was then rapidly cooled to 200°C or lower in about 0.5 seconds by supplying cooling water from the cooling water supplying section (a solid line in the first process shown in FIG. 2).

### • Second process

(1) Moving speed of the heating section and the cooling water supplying section: 800mm/min.
(2) After the sample dropped to room temperature, it was set in the high-frequency induction heating apparatus again. A current to be made to flow in the coil of the heating section was adjusted to 100A, and after the sample was pre-heated to 400°C, it was rapidly heated up to 900°C in about 0.5 seconds. The sample was held for about 2.5 seconds until the temperature dropped to 800°C, it was then rapidly cooled down to about 200°C or lower in about 0.5 seconds by supplying cooling water from the cooling water supplying section, and it was thereafter left until the temperature reached room temperature (a solid line in the first process shown in FIG. 2).

### • Treatment Condition (B)

### • First process

(1) Moving speed of the heating section and the cooling water supplying section: 800mm/min.
(2) The coil of the heating section was adjusted to 120A. A sample was pre-heated according to gradual temperature rising as the heating section came relatively close to the sample, but the sample was rapidly heated from 400°C to 1200°C in about one second. Thereafter, the sample was held for about 2.5 seconds until the temperature thereof dropped to 1050°C, and it was then rapidly cooled to 200°C or lower in about 0.5 seconds by supplying cooling water from the cooling water supplying section (a solid line in the first process shown in FIG. 2).

### • Second process

(1) Moving speed of the heating section and the cooling water supplying section: 1000mm/min.
(2) After the sample dropped to room temperature, it was set in the high-frequency induction heating apparatus again. A current to be made to flow in the coil of the heating section was adjusted to 100A, and after the sample was pre-heated to 400°C, it was rapidly heated up to 800°C in about 0.5 seconds. The sample was held for about 2.5 seconds until the temperature dropped to 700°C, it was then rapidly cooled down to about 200°C or lower in about 0.5 seconds by supplying cooling water from the cooling water supplying section, and it was thereafter left until the temperature reached room temperature (a broken line in the first process shown in FIG. 2).

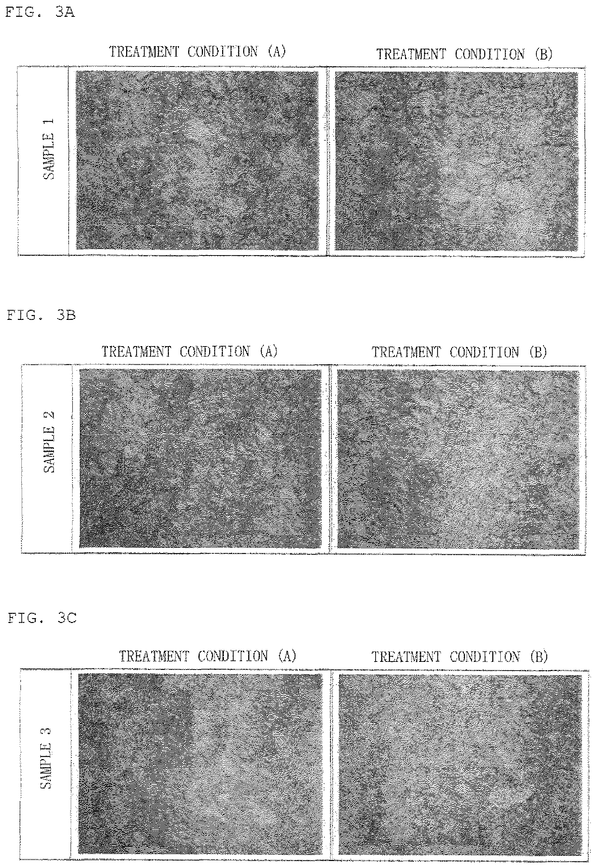

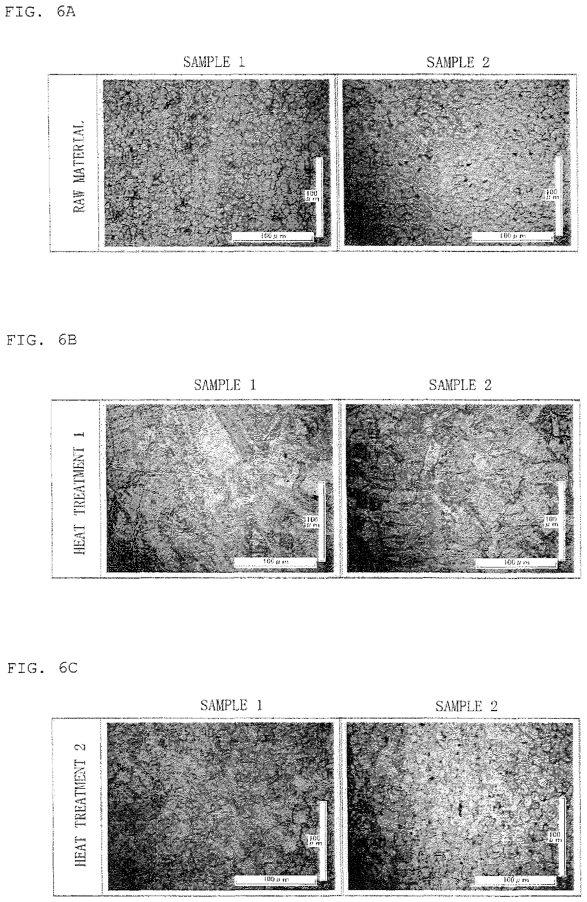

FIG. 3A are electron microscope photographs of microstructures of Samples 1 which were treated according to the treatment conditions (A) or (B) and which were observed by cutting near their central portions in their longitudinal directions, and FIG. 3B are electron microscope photographs of microstructures of the Samples 2 which were treated according to the treatment conditions (A) or (B) and which were observed by cutting near their central portions in their longitudinal directions (incidentally, regarding the microstructures of the raw material states of Samples 1 and Samples 2, see the column "Raw Material" in FIG. 6A). FIG. 3C are electron microscope photographs of microstructures of Samples 3 which were treated according to the treatment conditions (A) or (B) and which were observed by cutting near their central portions in their longitudinal directions.

From FIG. 3A, Sample 1 which was treated according to the treatment condition (A) was composed of a duplex grain size structure of a ferrite structure of fine grains having grain diameters of 1µm to less than 5µm and a ferrite structure of grains having grain diameters of 5 to 30um, where island-shaped martensites having a grain diameter of 30µm or less were contained in the duplex grain size structure in an amount of less than 5%. On the other hand, in the case of the treatment condition (B) where the moving speed was faster than that of the treatment condition (A) and the heating temperature in the second process was lower than that of the treatment condition (A), Sample 1 was composed of a duplex grain size structure of a ferrite structure of fine grains having grain diameters of 1µm to less than 5µm and a ferrite structure of grains having grain diameters of 5 to 20µm, so that crystal grains of Sample 1 according to the treatment condition (A) were slightly larger than those of Sample 1 according to the treatment condition (B) .

In the case of FIG. 3B, Sample 2 which was treated according to the treatment condition (A) contained island-shaped martensites having grain diameters of 30µ in an amount of about 20% in addition to a duplex grain size structure of a ferrite structure of fine grains having grain diameters of 1µm to less than 5pm and a ferrite structure of grains having grain diameters of 5 to 30µm. In the case of the treatment condition (B), Sample 2 was composed of a duplex grain size structure of a ferrite structure of fine grains having grain diameters of 1µm to less than 5µm and a ferrite structure of grains having grain diameters of 5 to 20µm.

Samples 3 contained C in an amount of 0.12% which was more than those of Samples 1 and Samples 2. Accordingly, as shown in FIG. 3C, both Samples which were treated according to the treatment condition (A) or (B) contained island-shaped martensites having grain diameters of 30µm or less in addition to a duplex grain size structure of a ferrite structure of fine grains having grain diameters of 1µm to less than 5µm and a ferrite structure of fine grains having grain diameters of 5 to 30µm, where the island-shaped martensites were contained in an amount of about 50 to 60%.

### (Test Example 2)

The above Samples 1 was heat-treated by a high-frequency induction heating apparatus provided with a heating section comprising a lengthy coil with a length of 6 cm shown in FIG. 1C and first and second cooling water supplying sections. A treatment condition was as the following (C).

### • Treatment Condition (C)

### • First process

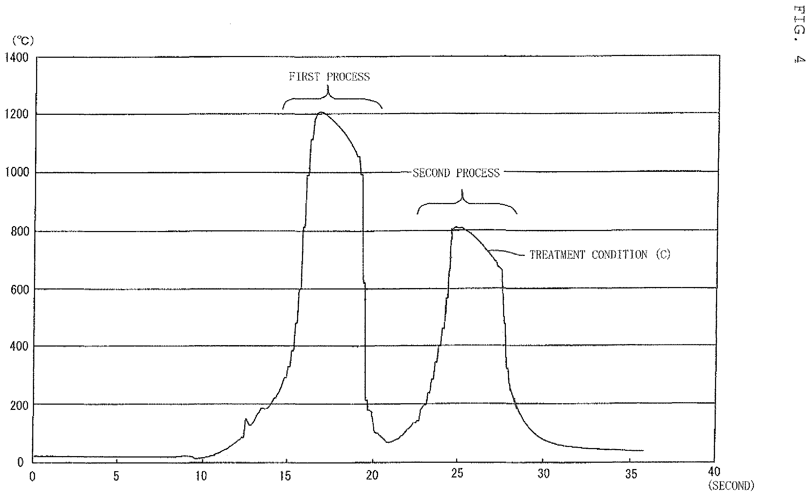

(1) Moving speed of the heating section and the first and second cooling water supplying sections: 300mm/min.
(2) The coil of the heating section was adjusted to 120A. A sample was pre-heated according to gradual temperature rising as the heating section came relatively close to the sample, but the sample was rapidly heated from 400°C to 1200°C in about one second. Thereafter, the sample was held for about 2.5 seconds until the temperature thereof dropped to 1050°C, and it was then rapidly cooled to 200°C or lower in about 0.5 seconds by supplying cooling water from the cooling water supplying section (a solid line in the first process shown in FIG. 4).

### • Second process

(1) Moving speed of the heating section and the first and second cooling water supplying sections: 1000mm/min.
(2) A current to be made to flow in the coil of the heat ing section was adjusted to 90A and Sample 1 whose temperature dropped to about 200°C was rapidly heated up to 800°C in about 0.5 seconds by the rear portion of the heating section. Sample 1 was held for about 2.5 seconds until its temperature dropped to 700°C, it was then rapidly cooled to 200°C or less in about 0.5 seconds by supplying cooling water from the second cooling water supplying section, and thereafter it was left until its temperature reached room temperature (a solid line in the second process in FIG. 4).

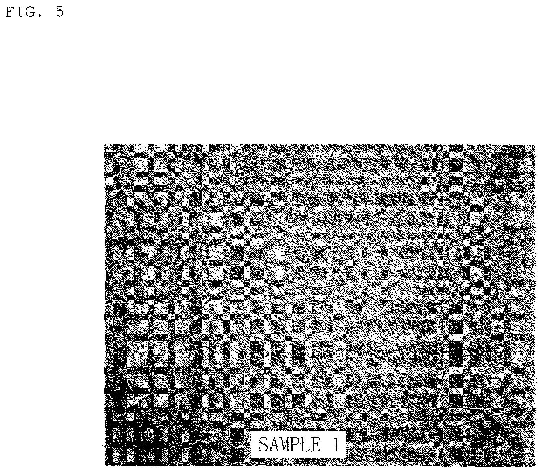

FIG. 5 is an electron microscope photograph of a microstructure of Sample 1 which was treated according to the treatment condition (C) and which was observed by cutting near its central portion in its longitudinal direction. From FIG. 5, Sample 1 which was treated according to the treatment condition (C) included island-shaped martensites having grain diameters of about 5 to 10µm formed in an amount of about 20% in addition to a duplex grain size structure of a ferrite structure of fine grains having grain diameters of 1µm to less than 5µm and a ferrite structure of grains having grain diameters of 5 to 20µm.

### (Comparative Example 1)

As the heat treatment apparatus, the high-frequency induction heating apparatus provided with one set of the heating section and the cooling water supplying section shown in FIG. 1A was used, and heat treatment where rapid heating and rapid cooling were only once performed was performed to Sample 1 (Comparative Sample 1) and Sample 2 (Comparative Sample 2).

Regarding the treatment condition, a case where after rapid heating was performed up to 1200°C by the heating section (coil), rapid cooling was performed by the cooling water supplying section (Heat Treatment 1) and a case where after rapid heating was performed up to 900°C by the heating section (coil), rapid cooling was performed by the cooling water supplying section (Heat Treatment 2) were tested. The condition of Heat Treatment 1 was aimed to produce a martensite structure while the condition of Heat Treatment 2 was aimed to produce a duplex grain size structure or a duplex grain size structure including island-shaped martensites. Electron microscope photographs of microstructures of respective Samples whose were observed by cutting at their central portions in their longitudinal directions are shown in FIG. 6A to 6C. Incidentally, in these figures, "Raw Material" indicates microstructures of Sample 1 and Sample 2 before heat treatment is performed thereto.

From FIG. 6A, both Sample 1 and Sample 2 in their raw material states have approximately-even ferrite structures of grains with grain diameters of 10µm or less. Both Comparative Sample 1 and Comparative Sample 2 in their states of "Heat Treatment 1" shown in FIG. 6B have coarse martensite structures of grains with grain diameter of 20 to 100µm. Comparative Sample 2 in its state of "Heat Treatment 2" shown in FIG. 6C has a duplex grain size structure of a ferrite structure of fine grains having grain diameters of 1µm to less than 5µm and a ferrite structure of grains having grain diameters of 5 to 30µm. In the case of Comparative Sample 1, island-shaped martensites having a grain diameter of about 5 to 10µm are formed in addition to a duplex grain size structure of a ferrite structure of fine grains having grain diameters of 1µm to less than 5µm and a ferrite structure of grains having grain diameters of 5 to 30µm.

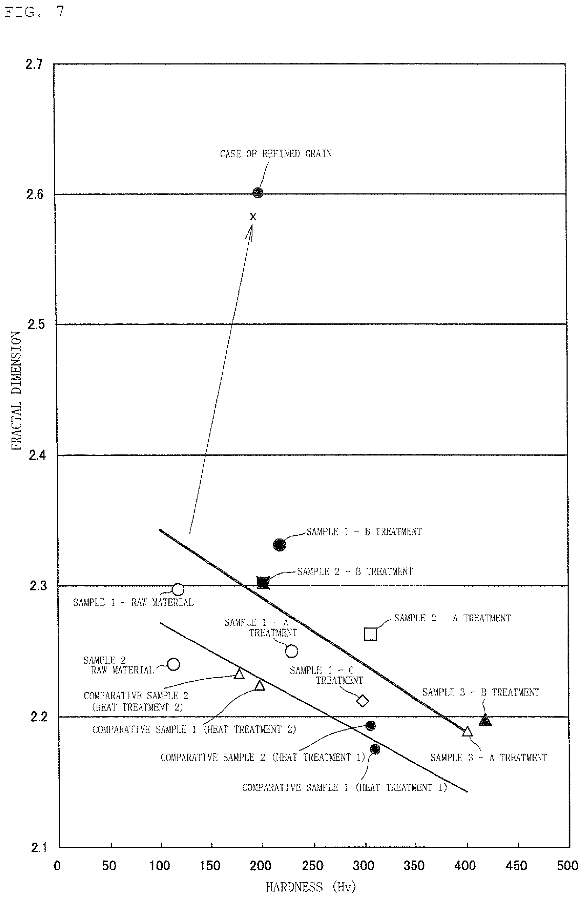

FIG. 7 is a graph where an average hardness (Hv) is represented on a horizontal axis while fractal dimension of a grain diameter is represented on a vertical axis, and respective values of respective Samples 1, 2 and 3 of Test Example 1 and Test Example 2, and Comparative Samples 1 and 2 of Comparative Example 1 are plotted. As apparent from this figure, in the case of Sample 1 and Sample 2, ones where the duplex grain size structure was formed or island-shaped martensites were formed in the duplex grain size structure in both Test Examples 1 and 2 were higher in fractal dimension than Comparative Samples 1 and 2 (Heat treatment 1) where martensite structures were formed in Comparative Example 1. It was found that, regarding inclinations obtained by least-square method, shown in FIG. 7, Test Examples 1 tended to be higher in fractal dimension than Comparative Examples 1 as a whole, and by performing rapid heating treatment and rapid cooling treatment multiple times like Test Example 1, even in ones with same duplex grain size structure formed or with same island-shaped martensites formed in a duplex grain size structure, Samples 1 and 2 - A treatment (treatment according to the treatment condition (A)) and Samples 1 and 2 - B treatment (treatment according to the treatment condition (B)) could be made finer in grain diameter and higher in toughness than Comparative Samples 1 and 2 (Heat Treatment 2). Further, even in the case of Sample 1 - C treatment (treatment according to the treatment condition (C)) of Test Example 2, though hardness became high, fractal dimension was approximately equal to the case of Comparative Sample 1 (Heat Treatment 2) formed with the duplex grain size structure.

Further, very high hardness was obtained in Sample 3 of Test Example 1. This is because a dispersion percentage of island-shaped martensites is high, and Sample 3 of Test Example 1 is inferior to Samples 1 and 2 - A treatment and Samples 1 and 2 - B treatment in toughness. However, when compared with Comparative Samples 1 and 2 (Heat Treatment 1), it is found that Sample 3 of Test Example 1 maintained hardness which was not inferior to that of the case having the martensite structure and shown in FIG. 6B, while it became high in fractal dimension, so that it could be increased in toughness while it maintained hardness higher than those of Comparative Samples 1 and 2 (Heat Treatment 1) . However, when C content is more than that of Sample 3 of Test Example 1, there is a possibility that the toughness is further inferior, so that it is more desirable that the C content is set to 0.12% or less.

Incidentally, when high strength is achieved by refining crystal grains in a metal structure, the fractal dimension is largely raised according to Law of Hall-Petch as shown by arrow X as compared with the state of raw materials shown in FIG. 7, but the fact that high strength does not depend on refinement of crystal grains in the case of the technique of the present invention utilizing ultra-rapid heating and ultra-rapid cooling is also understood from such a fact that a rising percentage of a value of a fractal dimension showed a small tendency.

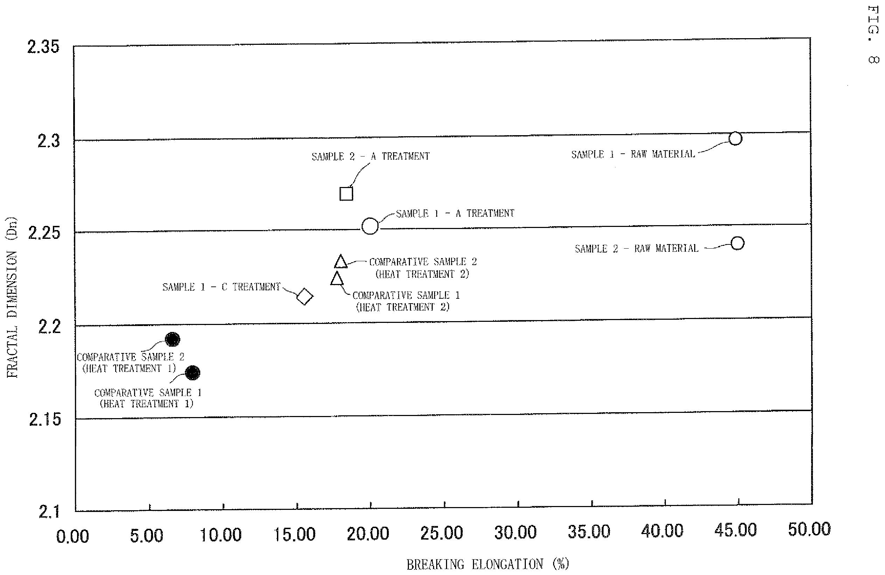

FIG. 8 is a graph where a breaking elongation (%) is represented on a horizontal axis while fractal dimension of a grain diameter is represented on a vertical axis, and respective values of respective Samples 1 and 2 of Test Example 1 and Test Example 2, and Comparative Samples 1 and 2 of Comparative Example 1. For example, "Sample 1 - A treatment" indicates one where island-shaped martensites are contained in the above-described duplex grain size structure in an amount of less than 5% and whose breaking elongation is 18.16%, while "Sample 2 - A treatment" indicates one which is composed of the above-described duplex grain size structure and whose breaking elonation is 20.44%. The breaking elongation which is one of indexes of the toughness tends to become large according to the increase of the fractal dimension, so that a correlation between the above-described fractal dimension and toughness became apparent. Then, it was also found from FIG. 8 that Samples 1 and 2 of the present invention which were subjected to rapid heating treatment and rapid cooling treatment multiple times could elevate their toughness as compared with Comparative Samples 1 and 2 which were subjected to rapid heating treatment and rapid cooling treatment only once.

### (Test Example 3) (Reference)

### (Bending Test)

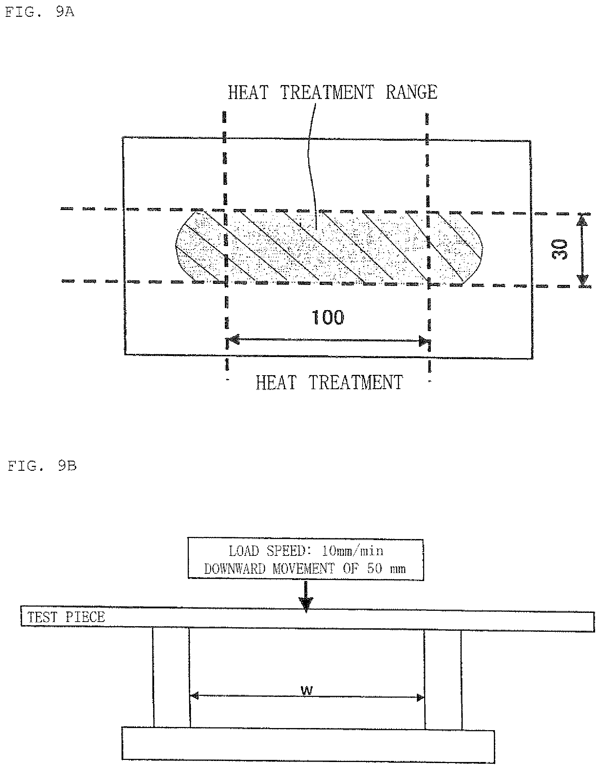

Three kinds of samples having the same chemical components as those of the cold-rolled steel plate of the ordinary steel of Sample 1 and whose thicknesses were 0.5 mm, 0.8 mm, and 1.0 mm, respectively, were heat-treated such that the heat treatment covers their ranges of a width of 30 mm and a length of 100 mm (see FIG. 9A). In the heat treatment, each treatment included in the first process and the second process was performed according to the above "Treatment Condition (A) " .

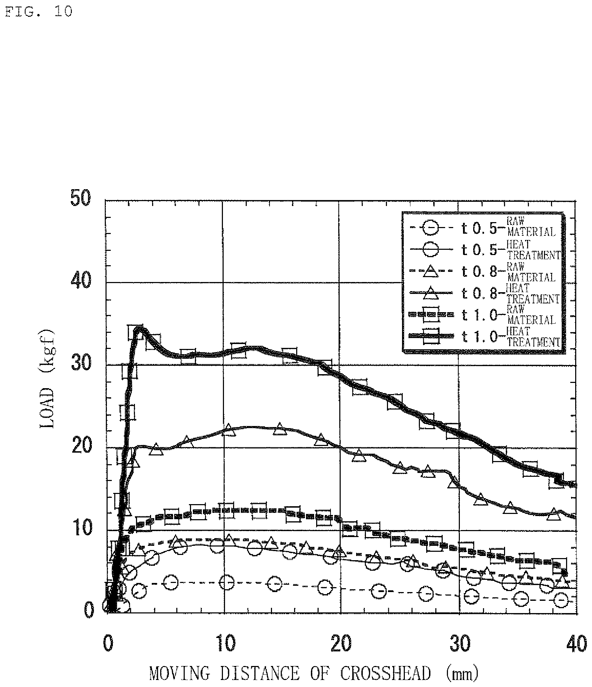

As shown in FIG. 9B, each of the above-described Samples was set on the supporting stand supporting the vicinities of both ends thereof, and a load was imparted on a central portion of the heat-treated range of each Sample in a longitudinal direction thereof at a loading rate of 10 mm/min by a crosshead. Respective ones of non-heated ones (represented as "Raw Material" in FIG. 10) and heat-treated ones ("Heat Treatment" in FIG. 10) of all Samples were tested. The test result is shown in FIG. 10.

As apparent from FIG. 10, regarding a reaction force due to deflection of a beam caused by a bending moment at a transition point from an elastic region to a plastic region in a bending property, Sample with a thickness of 0.5 mm which was heat-treated is about twice the Sample before heat-treated, and Samples with a thickness of 0.8 mm and with a thickness of 1.0 mm which were heat-treated are about 2.5 times those before heat-treated. Accordingly, by using Sample with a thickness of 0.5 mm which was heat-treated instead of a raw material with a thickness of 0.8 mm or using Sample with a thickness of 0.8 mm which was heat-treated instead of a raw material with a thickness of 1.0 mm, contribution to weight reduction of a seat frame or the like can be achieved.

### (Test Example 4) (Reference)

### (Tensile Test)

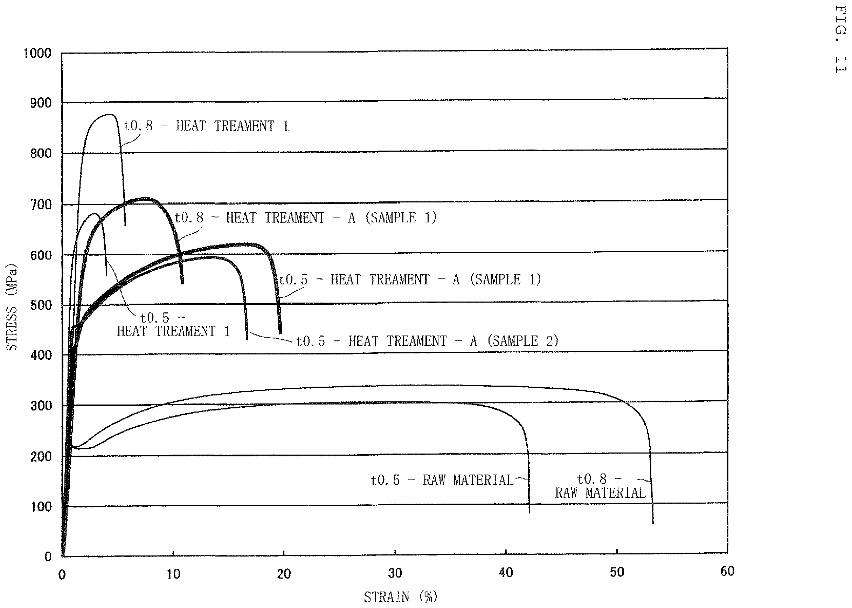

Tests were performed by grasping end portions of samples with a length of 150 mm and a width of 30 mm in their longitudinal directions by a chuck. The samples were Samples 1 with a thickness of 0.5 mm and with a thickness of 0.8 mm which were used in the above-described bending tests and Sample 2 with a thickness of 0.5 mm. The result is shown in FIG. 11. In FIG. 11, "Heat treatment - A (Sample 1)" and "Heat Treatment - A (Sample 2) " were heat-treated according to the above-described treatment condition (A) of Test Example 1, where the microstructure was the duplex grain size structure or it was the duplex grain size structure formed therein with island-shaped martensites. "Heat treatment 1" is a sample which was heat-treated according to the above-described "Heat Treatment 1" of Comparative Example 1 and which resulted in martensite structure.

As a result, the yield point (proof stress) of the sample formed with the martensite structure of Heat Treatment 1 in Comparative Example 1 is high but the breaking elongation thereof is low. On the other hand, the yield points (proof stresses) of "Heat treatment - A (Sample 1) " and "Heat Treatment - A (Sample 2)", when having a thickness of 0.5 mm, were about twice that of a raw material before heat-treated and they were lower than that of one formed with a martensite structure, but the breaking elongations thereof were at least three times that of the one formed with a martensite structure . The yield points (proof stresses) of "Heat treatment - A (Sample 1)" and "Heat Treatment - A (Sample 2)", when having a thickness of 0.8 mm, were about 2.5 times that of a raw material before heat-treated, but the breaking elongation thereof were about twice that of one formed with a martensite structure.

### (Test Example 5) (Reference)

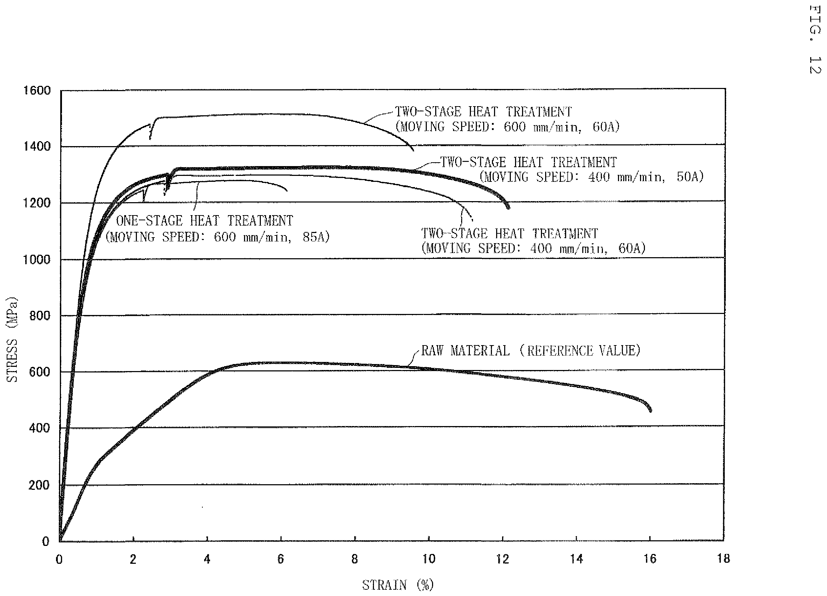

A steel pipe made of carbon steel for machine or structure (STKM-13C) with a diameter of 12 mm, a thickness of 1.0 mm, and C content of 0.08% was heat-treated while being rotated at a rotation speed of 400 rpm. Regarding the case where the heat treatments in the first process and the second process were performed by the high-frequency induction heating apparatus shown in FIG. 1A (represented as "two-stage heat treatment" in FIG. 12) and the case where only the heat treatment in the first process was performed (represented as "one-stage heat treatment" in FIG. 12), tensile tests were performed and compared with each other. The result is shown in FIG. 12.

As apparent from FIG. 12, samples which were subjected to the two-stage heat treatment became about at least twice that of a raw material regarding the yield point (proof stress) and they had breaking elongation about twice that of a sample which was subjected to the one-stage heat treatment. Incidentally, since the "Raw Material" in FIG. 12 was not attached with an elongation meter, a rising of a graph thereof was different from those of the other samples which were heat-treated, but the breaking elongation thereof was corrected from actual measured values. Further, in graphs of samples
which were heat-treated, the reason why loads applied to the samples dropped halfway was because a measuring machine was stopped and the elongation meter was detached from the samples halfway since while the sample was being attached with a measuring tool, it could not be measured until breaking took place.

From the above, it was found that all of the hardness, the yield point (proof stress), the tensile strength, the reaction force due to deflection of a beam caused by a bending moment, and the breaking elongation of a steel where the microstructure which was subjected to the heat treatment of the present invention was a duplex grain size structure or a duplex grain size structure formed with island-shaped martensites, namely, a steel which was subjected to the rapid heating and rapid cooling treatments in the first process and the second process were maintained in high level, and a steel having high strength and high toughness (high ductility) could be obtained while it was obtained by heat-treating a commercially-available ordinary steel.

## Claims

1. A method for manufacturing a high-strength and high-toughness thin steel by heat-treating a steel raw material, comprising:
using a thin low-carbon steel having a thickness of 1.2 mm or less as the steel raw material which is a reception material of heat treatment;
a first process of rapidly cooling the thin low-carbon steel after rapid heating thereof to obtain a martensite structure; and
a second process of rapidly cooling the thin low-carbon steel which have been subjected to the first process after rapidly reheating the same to a temperature lower than a temperature at a rapid heating time in the first process, wherein
the first process and the second process are implemented while the thin low-carbon steel is being relatively moved to each heating section and each cooling section which perform rapid heating and rapid cooling treatments in the first process and the second process;
the first process includes a step of rapidly heating the thin low-carbon steel up to a temperature of 1000°C or higher at a rate of 300°C/second or more and a step of rapidly cooling the thin low-carbon steel at a rate of 300°C/second or more after the thin low-carbon steel is held at a temperature of 900°C or higher within ten seconds; and
the second process includes a step of rapidly heating the thin low-carbon steel up to a temperature of 700°C or higher at a rate of 300°C/second or more after the cooling in the first process and a step of rapidly cooling the thin low-carbon steel at a rate of 300°C/second or more after the thin low-carbon steel is held at a temperature of 600°C or higher within ten seconds,
wherein a heat treatment apparatus which treats the thin low-carbon steel is provided with a first heating section which performs the rapid heating treatment in the first process, a first cooling section which performs the rapid cooling treatment in the first process, a second heating section which performs the rapid heating treatment in the second process, and a second cooling section which performs the rapid cooling treatment in the second process, and
the thin low-carbon steel is sequentially treated in the first heating section, the first cooling section, the second heating section, and the second cooling section,
wherein the first heating section and the second heating section are composed of one heating section having a predetermined length extending in a moving direction, and the cooling treatment in the first process and the cooling treatment in the second process can be performed to the thin low-carbon steel which is a target to be treated from opposite faces thereof.

2. The method for manufacturing a high-strength and high-toughness thin steel according to claim 1, wherein the rapid heating in the first process and the rapid heating in the second process are implemented by high-frequency induction heating.

3. The method for manufacturing a high-strength and high-toughness thin steel according to claim 1, wherein the rapid heating in the first process and the rapid heating in the second process are implemented by laser heating.

4. The method for manufacturing a high-strength and high-toughness thin steel according to claim 1, wherein C content of the thin low-carbon steel is in a range of 0.01 to 0.12% by mass% and the rest thereof is composed of iron and inevitable impurities.

5. The method for manufacturing a high-strength and high-toughness thin steel according to claim 1, wherein
rapid heating is performed up to a temperature in a range of 1000°C to 1250°C at the rapid heating step in the first process and
rapid heating is performed up to a temperature in a range of 750°C to 1050°C at the rapid heating step in the second process.

6. The method for manufacturing a high-strength and high-toughness thin steel according to claim 1, wherein a holding time before the rapid cooling after the rapid heating in the first process is set within five seconds, and the holding time before the rapid cooling after the rapid heating in the second process is set within five seconds.

7. The method for manufacturing a high-strength and high-toughness thin steel according to claim 1, wherein, when the thin low-carbon steel is pipe-shaped, treatment is performed while the thin low-carbon steel is being rotated.

8. The method for manufacturing a high-strength and high-toughness thin steel according to claim 1, wherein the steel raw material which is a reception material of heat treatment is a thin low-carbon steel with a thickness of 1.0 mm or less.

9. The method for manufacturing a high-strength and high-toughness thin steel according to claim 1, wherein the steel raw material which is a reception material of heat treatment is a thin low-carbon steel with a thickness of 0.8 mm or less.

10. The method for manufacturing a high-strength and high-toughness thin steel according to claim 1, wherein the steel raw material which is a reception material of heat treatment is a thin low-carbon steel with a thickness of 0.5 mm or less.

11. A heat treatment apparatus which uses a thin low-carbon steel having a thickness of 1.2 mm or less as the steel raw material which is a reception material of heat treatment and which is used to manufacture a high-strength and high-toughness thin steel by a first process of rapidly cooling the thin low-carbon steel after rapid heating thereof to obtain a martensite structure and a second process of rapidly cooling the thin low-carbon steel which have been subjected to the first process after rapidly reheating the same to a temperature lower than a temperature at a rapid heating time in the first process, wherein
a work supporting section which supports the thin low-carbon steel which is a target to be treated, a first heating section which performs the rapid heating treatment in the first process, a first cooling section which performs the rapid cooling treatment in the first process, a second heating section which performs the rapid heating treatment in the second process, and a second cooling section which performs the rapid cooling treatment in the second process are sequentially arranged; and
the first heating section, the first cooling section, the second heating section, and the second cooling section are provided so as to be movable relative to the work supporting section,
wherein one heating section having a predetermined length extending in a moving direction, the first cooling section arranged on the side opposite to the heating section via the work, and the second cooling section arranged on the same side as the heating section to be separated from the heating section by a predetermined distance rearward in the moving direction are provided, and the heating section has such a length that a vicinity of a front portion thereof corresponds to the first cooling section and a vicinity of a rear portion thereof extends rearward in the moving direction beyond the first cooling section; and
the heating section is configured to have two functions such that the vicinity of the front portion of the heating section has a function of the first heating section which performs the rapid heating in the first process and the vicinity of the rear portion of the heating section has a function of the second heating section which performs the rapid heating in the second process.

12. The heat treatment apparatus according to claim 11, wherein the work supporting section is rotatably provided in a supporting state of the thin low-carbon steel.

13. The heat treatment apparatus according to claim 11, wherein each of the heating sections includes a coil performing high-frequency induction heating.

14. The heat treatment apparatus according to claim 11, wherein each of the heating sections is provided with a laser performing laser heating.

## Patentansprüche

1. Verfahren zur Herstellung eines dünnen Stahls mit hoher Festigkeit und hoher Zähigkeit durch Wärmebehandeln eines Stahlrohmaterials, umfassend:
Verwenden eines dünnen kohlenstoffarmen Stahls mit einer Dicke von 1,2 mm oder weniger als Stahlrohmaterial, das als Material zum Wärmebehandeln dient;
einen ersten Schritt, bei dem der dünne kohlenstoffarme Stahl nach dessen rascher Erwärmung rasch abgekühlt wird, um eine Martensitstruktur zu erhalten; und
einen zweiten Schritt, bei dem der dünne kohlenstoffarme Stahl, der im ersten Schritt behandelt wurde, rasch abgekühlt wird, nachdem er wieder auf eine Temperatur erwärmt wurde, die unterhalb der Temperatur bei einer raschen Erwärmungszeit im ersten Schritt liegt, wobei
der erste Schritt und der zweite Schritt erfolgen, während der dünne kohlenstoffarme Stahl relativ zu jedem Heizabschnitt und jedem Kühlabschnitt bewegt wird, in denen die rasche Wärmebehandlung und die rasche Kühlbehandlung im ersten Schritt und im zweiten Schritt erfolgen;
der erste Schritt einen Schritt, bei dem der dünne kohlenstoffarme Stahl rasch auf eine Temperatur von 1000°C oder höher mit einer Rate von 300°C/Sekunde oder mehr erwärmt wird, und einen Schritt, bei dem der dünne kohlenstoffarme Stahl mit einer Rate von 300°C/Sekunde oder mehr rasch abgekühlt wird, nachdem der dünne kohlenstoffarme Stahl für 10 Sekunden bei einer Temperatur von 900°C oder höher gehalten wurde, umfasst; und
der zweite Schritt einen Schritt, bei dem der dünne kohlenstoffarme Stahl nach dem Abkühlen im ersten Schritt rasch auf eine Temperatur von 700°C oder höher mit einer Rate von 300°C/Sekunde oder mehr erwärmt wird, und einen Schritt, bei dem der dünne kohlenstoffarme Stahl mit einer Rate von 300°C/Sekunde oder mehr rasch abgekühlt wird, nachdem der dünne kohlenstoffarme Stahl für 10 Sekunden bei einer Temperatur von 600°C oder höher gehalten wurde, umfasst;
wobei eine Wärmebehandlungsvorrichtung zur Behandlung des dünnen kohlenstoffarmen Stahls über einem ersten Heizabschnitt, in dem die rasche Wärmebehandlung im ersten Schritt erfolgt, einen ersten Kühlabschnitt, in dem die rasche Kühlbehandlung im ersten Schritt erfolgt, einen zweiten Heizabschnitt, in dem die rasche Wärmebehandlung im zweiten Schritt erfolgt, und einen zweiten Kühlabschnitt, in dem die rasche Kühlbehandlung im zweiten Schritt erfolgt, verfügt; und
der dünne kohlenstoffarme Stahl nacheinander im ersten Heizabschnitt, im ersten Kühlabschnitt, im zweiten Heizabschnitt und im zweiten Kühlabschnitt behandelt wird,
wobei der erste Heizabschnitt und der zweite Heizabschnitt aus einem Heizabschnitt mit einer vorbestimmten Länge, die sich in der Bewegungsrichtung erstreckt, zusammengesetzt sind und die Kühlbehandlung im ersten Schritt und die Kühlbehandlung im zweiten Schritt auf den dünnen kohlenstoffarmen Stahl angewendet werden können, bei dem es sich um ein Zielstück handelt, das von seinen gegenüberliegenden Seiten her behandelt wird.

2. Verfahren zur Herstellung eines dünnen Stahls mit hoher Festigkeit und hoher Zähigkeit gemäß Anspruch 1, wobei das rasche Erwärmen im ersten Schritt und das rasche Erwärmen im zweiten Schritt mittels Hochfrequenzinduktionsheizen erfolgen.

3. Verfahren zur Herstellung eines dünnen Stahls mit hoher Festigkeit und hoher Zähigkeit gemäß Anspruch 1, wobei das rasche Erwärmen im ersten Schritt und das rasche Erwärmen im zweiten Schritt mittels Laserheizen erfolgen.

4. Verfahren zur Herstellung eines dünnen Stahls mit hoher Festigkeit und hoher Zähigkeit gemäß Anspruch 1, wobei der C-Gehalt des dünnen kohlenstoffarmen Stahls in einem Bereich von 0,01 bis 0,12 Massen-% liegt und der Rest davon aus Eisen und unvermeidlichen Verunreinigungen zusammengesetzt ist.

5. Verfahren zur Herstellung eines dünnen Stahls mit hoher Festigkeit und hoher Zähigkeit gemäß Anspruch 1, wobei
das rasche Erwärmen bei dem Schritt des raschen Erwärmens im ersten Schritt bis zu einer Temperatur in einem Bereich von 1000°C bis 1250°C erfolgt und
das rasche Erwärmen bei dem Schritt des raschen Erwärmens im zweiten Schritt bis zu einer Temperatur in einem Bereich von 750°C bis 1050°C erfolgt.

6. Verfahren zur Herstellung eines dünnen Stahls mit hoher Festigkeit und hoher Zähigkeit gemäß Anspruch 1, wobei die Haltezeit vor dem raschen Abkühlen nach dem raschen Erwärmen im ersten Schritt auf fünf Sekunden eingestellt wird und die Haltezeit vor dem raschen Abkühlen nach dem raschen Erwärmen im zweiten Schritt auf fünf Sekunden eingestellt wird.

7. Verfahren zur Herstellung eines dünnen Stahls mit hoher Festigkeit und hoher Zähigkeit gemäß Anspruch 1, wobei, wenn der dünne kohlenstoffarme Stahl rohrförmig ist, die Behandlung erfolgt, während der dünne kohlenstoffarme Stahl gedreht wird.

8. Verfahren zur Herstellung eines dünnen Stahls mit hoher Festigkeit und hoher Zähigkeit gemäß Anspruch 1, wobei das Stahlrohmaterial, das als Material zum Wärmebehandeln dient, ein dünner kohlenstoffarmer Stahl mit einer Dicke von 1,0 mm oder weniger ist.

9. Verfahren zur Herstellung eines dünnen Stahls mit hoher Festigkeit und hoher Zähigkeit gemäß Anspruch 1, wobei das Stahlrohmaterial, das als Material zum Wärmebehandeln dient, ein dünner kohlenstoffarmer Stahl mit einer Dicke von 0,8 mm oder weniger ist.

10. Verfahren zur Herstellung eines dünnen Stahls mit hoher Festigkeit und hoher Zähigkeit gemäß Anspruch 1, wobei das Stahlrohmaterial, das als Material zum Wärmebehandeln dient, ein dünner kohlenstoffarmer Stahl mit einer Dicke von 0,5 mm oder weniger ist.

11. Wärmebehandlungsvorrichtung, die einen dünnen kohlenstoffarmen Stahl mit einer Dicke von 1,2 mm oder weniger als Stahlrohmaterial verwendet, das als Material zum Wärmebehandeln dient, und das zur Herstellung eines dünnen Stahls mit hoher Festigkeit und hoher Zähigkeit verwendet wird, durch einen ersten Schritt, bei dem der dünne kohlenstoffarme Stahl nach dessen rascher Erwärmung rasch abgekühlt wird, um eine Martensitstruktur zu erhalten, und einen zweiten Schritt, bei dem der dünne kohlenstoffarme Stahl, der im ersten Schritt behandelt wurde, rasch abgekühlt wird, nachdem er wieder rasch auf eine Temperatur erwärmt wurde, die unterhalb der Temperatur bei einer raschen Erwärmungszeit im ersten Schritt liegt, wobei
ein Werkstückträgerabschnitt, der den dünnen kohlenstoffarmen Stahl trägt, bei dem es sich um das zu behandelnde Zielstück handelt, ein erster Heizabschnitt, in dem die rasche Wärmebehandlung im ersten Schritt erfolgt, ein erster Kühlabschnitt, in dem die rasche Kühlbehandlung im ersten Schritt erfolgt, ein zweiter Heizabschnitt, in dem die rasche Wärmebehandlung im zweiten Schritt erfolgt, und ein zweiter Kühlabschnitt, in dem die rasche Kühlbehandlung im zweiten Schritt erfolgt, nacheinander angeordnet sind; und
der erste Heizabschnitt, der erste Kühlabschnitt, der zweite Heizabschnitt und der zweite Kühlabschnitt so vorgesehen sind, dass sie relativ zu dem Werkstückträgerabschnitt bewegbar sind,
wobei ein Heizabschnitt mit einer vorbestimmte Länge, die sich in der Bewegungsrichtung erstreckt, der erste Kühlabschnitt, der mittels des Werkstücks auf der dem Heizabschnitt gegenüberliegenden Seite angeordnet ist, und der zweite Kühlabschnitt, der auf der gleichen Seite wie der Heizabschnitt angeordnet ist, so dass er von dem Heizabschnitt durch einen vorbestimmten Abstand entgegen der Bewegungsrichtung getrennt ist, vorgesehen sind und der Heizabschnitt eine solche Länge aufweist, dass die Umgebung des vorderen Teils davon dem ersten Kühlabschnitt entspricht und die Umgebung des hinteren Teils davon sich entgegen der Bewegungsrichtung über den ersten Kühlabschnitt hinaus erstreckt; und
der Heizabschnitt so konfiguriert ist, dass er zwei Funktionen aufweist, so dass die Umgebung des vorderen Teils des Heizabschnitts die Funktion des ersten Heizabschnitts hat, in dem das rasche Erwärmen im ersten Schritt erfolgt und die Umgebung des hinteren Teils des Heizabschnitts die Funktion des zweiten Heizabschnitts hat, in dem das rasche Erwärmen im zweiten Schritt erfolgt.

12. Wärmebehandlungsvorrichtung gemäß Anspruch 11, wobei der dünne kohlenstoffarmen Stahl im Werkstückträgerabschnitt in einem drehbaren Zustand angeordnet ist.

13. Wärmebehandlungsvorrichtung gemäß Anspruch 11, wobei jeder der Heizabschnitte eine Spule zum Hochfrequenzinduktionsheizen aufweist.

14. Wärmebehandlungsvorrichtung gemäß Anspruch 11, wobei jeder der Heizabschnitte mit einem Laser zum Laserheizen vorgesehen ist.

## Revendications

1. Procédé de fabrication d'un acier mince à haute résistance et à ténacité élevée par traitement thermique d'un matériau brut en acier, comprenant :
l'utilisation d'un acier mince à faible teneur en carbone ayant une épaisseur de 1,2 mm ou moins en tant que matériau brut en acier qui est un matériau de réception de traitement thermique ;
un premier processus de refroidissement rapide de l'acier mince à faible teneur en carbone après son chauffage rapide pour obtenir une structure martensitique; et
un second processus de refroidissement rapide de l'acier mince à faible teneur en carbone qui a été soumis au premier processus après son réchauffage rapide à une température inférieure à une température à un temps de chauffage rapide dans le premier processus, dans lequel
le premier processus et le second processus sont implémentés pendant que l'acier mince à faible teneur en carbone est déplacé relativement vers chaque section de chauffage et chaque section de refroidissement qui effectuent des traitements de chauffage rapide et de refroidissement rapide dans le premier processus et le second processus;
le premier processus inclut une étape de chauffage rapide de l'acier mince à faible teneur en carbone jusqu'à une température de 1000°C ou plus à une vitesse de 300 °C/seconde ou plus et une étape de refroidissement rapide de l'acier mince à faible teneur en carbone à une vitesse de 300 °C/seconde ou plus après que l'acier mince à faible teneur en carbone a été maintenu à une température de 900°C ou plus durant un délai de dix secondes ; et
le second processus inclut une étape de chauffage rapide de l'acier mince à faible teneur en carbone jusqu'à une température de700°C ou plus à une vitesse de 300 °C/seconde ou plus après le refroidissement dans le premier processus et une étape de refroidissement rapide de l'acier mince à faible teneur en carbone à une vitesse de 300 °C/seconde ou plus après que l'acier mince à faible teneur en carbone a été maintenu à une température de 600 °C ou plus durant un délai de dix secondes,
dans lequel un appareil de traitement thermique qui traite l'acier mince à faible teneur en carbone est doté d'une première section de chauffage qui effectue le traitement de chauffage rapide dans le premier processus, d'une première section de refroidissement qui effectue le traitement de refroidissement rapide dans le premier processus, d'une seconde section de chauffage qui effectue le traitement de chauffage rapide dans le second processus, et d'une seconde section de refroidissement qui effectue le traitement de refroidissement rapide dans le second processus, et
l'acier mince à faible teneur en carbone est traité séquentiellement dans la première section de chauffage, la première section de refroidissement, la seconde section de chauffage, et la seconde section de refroidissement,
dans lequel la première section de chauffage et la seconde section de chauffage se composent d'une section de chauffage ayant une longueur prédéterminée s'étendant dans une direction de déplacement, et le traitement de refroidissement dans le premier processus et le traitement de refroidissement dans le second processus peuvent être effectués sur l'acier mince à faible teneur en carbone qui est une cible à traiter à partir de faces opposées de celui-ci.

2. Procédé de fabrication d'un acier mince à haute résistance et à ténacité élevée selon la revendication 1, dans lequel le chauffage rapide dans le premier processus et le chauffage rapide dans le second processus sont implémentés par chauffage par induction haute fréquence.

3. Procédé de fabrication d'un acier mince à haute résistance et à ténacité élevée selon la revendication 1, dans lequel le chauffage rapide dans le premier processus et le chauffage rapide dans le second processus sont implémentés par chauffage laser.

4. Procédé de fabrication d'un acier mince à haute résistance et à ténacité élevée selon la revendication 1, dans lequel la teneur en C de l'acier mince à faible teneur en carbone est dans une plage de 0,01 à 0,12 % en % en masse et le reste de celui-ci se compose de fer et d'impureté inévitables.

5. Procédé de fabrication d'un acier mince à haute résistance et à ténacité élevée selon la revendication 1, dans lequel
le chauffage rapide est réalisé jusqu'à une température dans une plage de 1000°C à 1250°C à l'étape de chauffage rapide dans le premier processus et
le chauffage rapide est réalisé jusqu'à une température dans une plage de 750°C à 1050°C à l'étape de chauffage rapide dans le second processus.

6. Procédé de fabrication d'un acier mince à haute résistance et à ténacité élevée selon la revendication 1, dans lequel un temps de maintien avant le refroidissement rapide après le chauffage rapide dans le premier processus est réglé à un délai de cinq secondes, et le temps de maintien avant le refroidissement rapide après le chauffage rapide dans le second processus est réglé à un délai de cinq secondes.

7. Procédé de fabrication d'un acier mince à haute résistance et à ténacité élevée selon la revendication 1, dans lequel, lorsque l'acier mince à faible teneur en carbone est mis en forme de tuyau, le traitement est réalisé pendant que l'acier mince à faible teneur en carbone est mis en rotation.

8. Procédé de fabrication d'un acier mince à haute résistance et à ténacité élevée selon la revendication 1, dans lequel le matériau brut en acier qui est un matériau de réception de traitement thermique est un acier mince à faible teneur en carbone d'une épaisseur de 1,0 mm ou moins.

9. Procédé de fabrication d'un acier mince à haute résistance et à ténacité élevée selon la revendication 1, dans lequel le matériau brut en acier qui est un matériau de réception de traitement thermique est un acier mince à faible teneur en carbone d'une épaisseur de 0,8 mm ou moins.

10. Procédé de fabrication d'un acier mince à haute résistance et à ténacité élevée selon la revendication 1, dans lequel le matériau brut en acier qui est un matériau de réception de traitement thermique est un acier mince à faible teneur en carbone d'une épaisseur de 0,5 mm ou moins.

11. Appareil de traitement thermique qui utilise un acier mince à faible teneur en carbone ayant une épaisseur de 1,2 mm ou moins en tant que matériau brut en acier qui est un matériau de réception de traitement thermique et qui est utilisé pour fabriquer un acier mince à haute résistance et à ténacité élevée par un premier processus de refroidissement rapide de l'acier mince à faible teneur en carbone après son chauffage rapide pour obtenir une structure martensitique et un second processus de refroidissement rapide de l'acier mince à faible teneur en carbone qui a été soumis au premier processus après son réchauffage rapide à une température inférieure à une température à un temps de chauffage rapide dans le premier processus, dans lequel
une section de support de travail qui supporte l'acier mince à faible teneur en carbone qui est une cible à traiter, une première section de chauffage qui effectue le traitement de chauffage rapide dans le premier processus, une première section de refroidissement qui effectue le traitement de refroidissement rapide dans le premier processus, une seconde section de chauffage qui effectue le traitement de chauffage rapide dans le second processus, et une seconde section de refroidissement qui effectue le traitement de refroidissement rapide dans le second processus sont agencées séquentiellement ; et
la première section de chauffage, la première section de refroidissement, la seconde section de chauffage, et la seconde section de refroidissement sont prévues de façon à être mobiles par rapport à la section de support de travail,
dans lequel une section de chauffage ayant une longueur prédéterminée s'étendant dans une direction de déplacement, la première section de refroidissement agencée sur le côté opposé à la section de chauffage via le travail, et la seconde section de refroidissement agencée sur le même côté que la section de chauffage à séparer de la section de chauffage d'une distance prédéterminée vers l'arrière dans la direction de déplacement sont prévues, et la section de chauffage a une longueur telle qu'un voisinage d'une portion avant de celle-ci correspond à la première section de refroidissement et un voisinage d'une portion arrière de celle-ci s'étend vers l'arrière dans la direction de déplacement au-delà de la première section de refroidissement ; et
la section de chauffage est configurée pour avoir deux fonctions de sorte que le voisinage de la portion avant de la section de chauffage a une fonction de la première section de chauffage qui effectue le chauffage rapide dans le premier processus et le voisinage de la portion arrière de la section de chauffage a une fonction de la seconde section de chauffage qui effectue le chauffage rapide dans le second processus.

12. Appareil de traitement thermique selon la revendication 11, dans lequel la section de support de travail est prévue de manière rotative dans un état de support de l'acier mince à faible teneur en carbone.

13. Appareil de traitement thermique selon la revendication 11, dans lequel chacune des sections de chauffage comprend une bobine effectuant le chauffage par induction haute fréquence.

14. Appareil de traitement thermique selon la revendication 11, dans lequel chacune des sections de chauffage est dotée d'un laser effectuant le chauffage laser.
